# EUROPÄISCHE PATENTSCHRIFT

(11) **EP 2 543 235 B1**
(45) Veröffentlichungstag und Bekanntmachung des Hinweises auf die Patenterteilung: **23.04.2014**
(21) Anmeldenummer: 11706576.3
(22) Anmeldetag: 02.03.2011
(51) Int. Cl.: H05B 33/08, H02M 3/156

(54) **FLACKERVERMEIDUNG BEI LEDS**
PREVENTING FLICKERING IN LEDS
PROCÉDÉ EMPÊCHANT LE PAPILLOTEMENT DE DEL

(30) Priorität: 04.03.2010 DE 102010002568
(43) Veröffentlichungstag der Anmeldung: 09.01.2013
(73) Patentinhaber: Tridonic AG, 8755 Ennenda (CH)
(72) Erfinder: COMBET, Dominique, CH-Glarus 8750 (CH); ZÜGER, Dominik, CH-8750 Glarus (CH)
(74) Vertreter: Rupp, Christian
(86) Internationale Anmeldenummer: PCT/EP2011/053085
(87) Internationale Veröffentlichungsnummer: WO 2011/107503

(56) Entgegenhaltungen:
- WO-A1-2009/003680
- WO-A1-2009/039112

## Beschreibung

Die Erfindung bezieht sich auf den Betrieb von LEDs und insbesondere auf den dimmbaren Betrieb von LEDs, bei dem ein durch sogenannten "Jitter" verursachtes Flackern der LEDs vermieden werden soll. Unter LEDs sind dabei durchgehend auch OLEDs zu verstehen, d.h. dass die LEDs organische und anorganische Leuchtdioden sein können.

Zum dimmbaren Betrieb von LEDs werden oft Dimmwertvorgaben in PWM-Signale umgesetzt, welche an einem Signaleingang eines LED-Konverters eingehen. Bei dem Konverter kann es sich insbesondere um einen Gleichstromwandlers handeln, der die Ausgangsleistung mittels Taktung der Ein- und Ausschaltphasen eines Schalters einstellen kann.

In den Einschaltzeiten des PWM-Signals erzeugt der LED-Konverter einen Strom, der zyklisch ansteigt und abfällt.

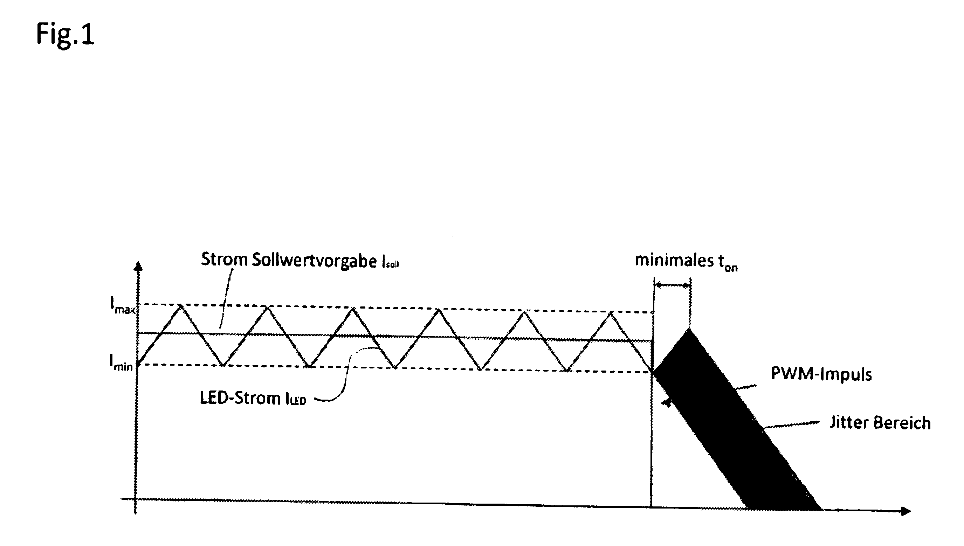

Fig.1 zeigt ein Beispiel, in dem auf vereinfachte Weise ein PWM-Impuls und ein korrespondierender LED-Strom dargestellt sind.

Die LEDs selbst können durch den LED-Konverter somit in einem sogenannten "Continuous Current Mode" (CCM) betrieben werden. Dieser zeichnet sich dadurch aus, dass der Strom nie auf Null abfällt. Der LED-Strom I_{LED}, der tatsächlich durch die LEDs fließt, wird dabei nach einer Sollwertvorgabe I_{Soll} für den zeitlich mittleren Stroms geregelt, indem der Schalter geöffnet und geschlossen wird. Der LED-Strom verläuft dementsprechend zyklisch ansteigend und fallend um den zeitlichen Mittelwert herum. Dabei wird das zyklisch Ansteigen und Abfallen des Stroms bspw. durch einen oberen und unteren Grenzwert I_{min,} Iₘₐₓ vorgegeben, die sich beide nach dem Sollwert richten.

Die Dauer der Einschaltzeit des Schalters und somit die Zeit, in der der LED-Strom ansteigt, wird darüber hinaus durch die minimal mögliche Einschaltdauer des Schalters vorgegeben oder kann durch eine Vorgabe des LED-Konverters bestimmt sein.

Eine Sollwertvorgabe, die das PWM-Signal selbst sein kann oder ein separat dem LED-Konverter zugeführtes Signal, gibt den zeitlich mittleren LED-Strom während der Einschaltzeitdauer des PWM-Signals vor. Am Ende eines PWM-Impulses (abfallende Flanke) klingt der LED-Strom und entsprechend die Lichtleistung indessen nicht instantan auf Null ab; vielmehr kommt es zu einem graduellen Ausklingen, da energetisierte passive Bauteile des LED-Konverters, insbesondere eine üblicherweise vorhandene Drossel entladen werden müssen.

Wie bereits erwähnt, soll bei bestimmten Schaltungen mit einer minimalen tₒₙ Zeit für den Schalter des Konverters gerechnet werden. Wenn somit unmittelbar vor dem Ende der Einschaltzeitdauer eines PWM-Impulses eine Einschaltphase (tₒₙ Zeit) beginnt, kann die Sollwertvorgabe mittels Öffnen des Schalters erst dann umgesetzt werden, wenn die minimale tₒₙ Zeit abgelaufen ist. Dieser Fall ist also von unterschiedlichen Faktoren abhängig und tritt deshalb rein statistisch auf, oft jedoch in zufällig wiederkehrenden zeitlichen Abständen.

Auch wenn die Frequenz der PWM-Impulse natürlicherweise so gewählt ist, dass sie für das menschliche Auge nicht sichtbar ist, kann die zufällige Variation des Ausklingverhaltens ("Jitter") am Ende eines PWM-Impulses in einem Frequenzbereich auftreten, in der das menschliche Auge sensibel ist. Dieser Jitter kann somit unerfreulicherweise als Flackern einer LED wahrgenommen werden.

In Figur 1 ist der eine Extremfall dargestellt, dass genau bei der Abschaltflanke des PWM-Signals noch der Einschaltvorgang des Schalters des LED-Konverters ausgelöst wurde, und somit der Strom erst nach Ablauf der minimal vorgegebenen Einschaltzeitdauer des Schalters Tₒₙ abklingt. Durch zufallsmäßige Verschiebungen zwischen sägezahnförmigen Stromverlauf und der Taktung des PWM-Signals kann nunmehr die schraffierte Fläche "Jitter Bereich", die die elektrische Energie wiedergibt, die bei diesem geschilderten Worst Case auftritt, gerade noch ausgelöst werden oder nicht. Durch zufallsmäßige Verschiebungen zwischen sägezahnförmigen Stromverlauf und der Taktung des PWM-Signals kann also ein abklingender LED-Strom nach dem PWM-Impuls auftreten, der am Anfang oder am Ende der schraffierten Fläche "Jitter Bereich" liegen kann.

Wenn nunmehr der in Figur 1 dargestellte Fall in einer für das Auge sichtbaren Frequenz auftritt, bspw. in einem Bereich bis 100 Hertz, wird dies vom menschlichen Auge als Flackern wahrgenommen, da ja mit einer sichtbaren Frequenz die Lichtleistung der LED moduliert ist.

Das Problem wird insbesondere bei niedrigen Dimmwerten verstärkt. Ein niedriger Dimmwert entspricht einem kurzen PWM-Tastverhältnis, also besonders kurzen PWM-Impulsen. Somit ergibt sich im Verhältnis ein prozentual besonders großer Unterschied in der Lichtleistung, wenn der tatsächliche LED-Strom um einen zusätzlichen Einschaltvorgang verlängert wird.

Der Erfindung liegt darum die Aufgabe zu Grunde, ein Verfahren zum Betreiben von mindestens einer LED bereitzustellen, bei der ein Flackern der LEDs reduziert wird.

Diese Aufgabe wird erfindungsgemäss durch die Merkmale der unabhängigen Ansprüche gelöst. Die abhängigen Ansprüche bilden den zentralen Gedanken der Erfindung in besonders vorteilhafter Weise weiter.

Die Erfindung schlägt vor, die Abschaltflanke des PWM-Signals und somit den abklingenden LED-Strom derart abzuändern, dass der Zeitpunkt zwischen dem Beginn der Abschaltflanke und dem Erreichen der Nullpegels des LED-Stroms bei Anwendung des erfindungsgemäßen Verfahrens größer ist als die Zeitdauer, die der freilaufende Strom bei einem gewöhnlichen PWM-Ausschaltflanke auf Grund der passiven Bauteile benötigen würde. Der oben beschriebene, problematische "Jitter-Bereich" kann so deutlich verringert werden.

Die Erfindung behandelt also in einem ersten Aspekt ein Verfahren zum Betreiben wenigstens einer LED. Dabei wird ein PWM-Signal einem Konverter zugeführt. Der Konverter erzeugt während der Einschaltzeitdauer eines PWM-Impulses einen zyklisch steigenden und fallenden LED-Strom. Das zeitliche Mittel des LED-Stroms ist auf eine Sollwertvorgabe geregelt. Nach der Einschaltzeitdauer des PWM-Impulses ist der zeitlich mittlere Wert des negativen Gradienten des abfallenden LED-Stroms kleiner als der mittlere Gradient des fallenden LED-Stroms während der Einschaltzeitdauer des PWM-Impulses.

In einer vorteilhaften Weitergestaltung ist nach der Einschaltzeitdauer des PWM-Impulses der zeitlich mittlere Wert des negativen Gradienten des abfallenden LED-Stroms kleiner als der mittlere Gradient des abfallenden Freilaufstroms durch die LEDs. Dabei tritt der Freilaufstrom durch die LEDs dann auf, wenn am Ende der Einschaltzeitdauer des PWM-Impulses die Sollwertvorgabe für den zeitlich gemittelten LED-Strom in einem Sprung auf Null gesetzt wird. Der zeitlich mittlere Wert des Gradienten des LED-Stroms nach der Einschaltzeitdauer des PWM-Impulses kann durch die Sollwertvorgabe des LED-Stroms vorgegeben werden.

Ebenfalls kann der zeitlich mittlere Wert des Gradienten des LED-Stroms nach der Einschaltzeitdauer des PWM-Impulses durch einen manipulierten PWM-Impuls bestimmt werden. Der manipulierte PWM-Impuls weist dabei vorzugsweise eine abgeflachte Abschaltflanke auf.

Die Sollwertvorgabe des LED-Stroms kann also dem manipulierten PWM-Impuls entsprechen, insbesondere im zeitlichen Verlauf und/oder bezüglich des Gradienten.

Vorteilhafterweise wird die Anschaltflanke des PWM-Impulses nicht manipuliert.

In einer bevorzugten Ausführungsform schneidet am Ende der Einschaltzeitdauer des PWM-Impulses die Sollwertvorgabe für den zeitlich gemittelten LED-Strom den abfallenden LED-Strom mindestens einmal von unten kommend.

In einem zweiten Aspekt behandelt die Erfindung ein Verfahren zum Betreiben wenigstens einer LED, wobei ein PWM-Signal einem Konverter zugeführt wird. Der Konverter erzeugt während der Einschaltzeitdauer eines PWM-Impulses einen zyklisch steigenden und fallenden LED-Strom erzeugt. Dadurch weist der LED-Strom einen Rippel auf. Das zeitliche Mittel des LED-Stroms ist dabei auf eine Sollwertvorgabe geregelt. Nach dem letzten Rippel, der in der Einschaltzeitdauer des PWM-Impulses zumindest eingeleitet worden ist, tritt mindestens ein weiteres Rippel des LED-Stroms auf. Die Rippel können dabei in ihren Größe variieren.

In einem dritten Aspekt behandelt die Erfindung ein Verfahren zum Betreiben wenigstens einer LED, wobei ein PWM-Signal einem Konverter zugeführt wird. Der Konverter erzeugt während der Einschaltzeitdauer eines PWM-Impulses einen zyklisch steigenden und fallenden LED-Strom. Das zeitliche Mittel des LED-Stroms ist dabei auf eine Sollwertvorgabe geregelt. Am Ende der Einschaltzeitdauer des PWM-Impulses wird nun die Sollwertvorgabe für den zeitlich gemittelten LED-Strom nicht in einem Sprung auf Null gesetzt, sondern über einen Zeitraum grösser als Null in mehreren diskreten Sprüngen oder stetig auf Null gefahren. Insbesondere in einer vorbestimmten Kurve wird der LED-Strom auf Null gefahren.

Der Zeitraum des Ausschaltens des LED-Stroms ist dabei vorzugsweise grösser als die Zeit, die der Freilaufstrom durch die LEDs von seinem Maximalwert bis zum Nullpegel benötigt.

Der Konverter zur Regelung des zeitlichen Mittels des Stromwerts kann abhängig von der Sollwertvorgabe einen unteren Schwellenwert für den LED-Strom setzen, bei dem eine Induktivität im Konverter geladen wird, sowie einen oberen Grenzwert für den LED-Strom, bei dem die Induktivität wieder über die wenigstens eine LED entladen wird.

Das Laden und/oder Entladen der Induktivität kann eine minimale Zeit (tmin) aufweisen, wobei ein Schalter, vorzugsweise ein MOSFET, und/oder der Konverter die minimale Einschaltdauer (tmin) definiert.

Eine Messung des tatsächlichen LED-Stroms kann beispielsweise über einen Messwiderstand vorgenommen werden. In Abhängigkeit von dem Messwert und der aktuellen Sollwertvorgabe kann dann die Induktivität geladen oder entladen werden.

Es ist außerdem möglich, dass nach der Einschaltzeitdauer des PWM-Impulses die Induktivität mindestens einmal neu geladen wird.

Bei dem LED-Strom kann es sich um einen gerippelten Gleichstrom im Continuous Current Mode (CCM), d.h. in einem nicht-lückenden Betrieb handeln. Dieser kann um einen auf Grundlage des PWM-Tastverhältnisses bestimmten zeitlichen Mittelwert herum verlaufen.

Der LED-Strom kann darüber hinaus über eine Hysterese-, d.h. eine Zweipunktregelung geregelt werden.

Nach der Einschaltzeitdauer des PWM-Impulses kann die Sollwertvorgabe für den zeitlich gemittelten LED-Strom als Rampe mit konstanter oder exponentieller Steigung ausgebildet sein.

Auch ist denkbar, dass nach der Einschaltzeitdauer des PWM-Impulses die Sollwertvorgabe für den zeitlich gemittelten LED-Strom der Entladefunktion des Freilaufstroms entspricht.

Nach der Einschaltzeitdauer des PWM-Impulses kann die Sollwertvorgabe für den zeitlich gemittelten LED-Strom als Kombinationen verschiedener Funktionen ausgebildet sein.

Die Erfindung behandelt weiterhin eine integrierte Schaltung, insbesondere ASIC oder Mikrokontroller, die zur Durchführung eines Verfahrens wie oben beschrieben ausgebildet ist, wenn sie in einem LED-Konverter eingebaut ist.

Die Manipulation der Abschaltflanke des PWM-Signals kann direkt in der integrierten Schaltung implementiert werden.

Auch behandelt die Erfindung einen LED-Konverter, aufweisend eine Integrierte Schaltung wie oben beschrieben.

Der LED-Konverter kann dabei mindestens ein passives elektrisches Bauteil aufweisen. Durch dessen Dimensionierung und Art kann die Zeit bestimmt werden, die der Freilaufstrom durch die LEDs von seinem Maximalwert bis zum Nullpegel am Ende der Einschaltzeitdauer des PWM-Impulses benötigt.

Bei dem mindestens einen passiven elektrischen Bauteil kann es sich um eine Induktivität und/oder eine Freilaufdiode handeln.

Die Erfindung betrifft auch ein LED-Modul, aufweisend wenigstens eine LED. Die LED ist dabei durch einen wie oben beschriebenen LED-Konverter versorgt.

Durch die Anzahl und Art der wenigstens einen LED kann die Zeit bestimmt werden, die der Freilaufstrom durch die LEDs von seinem Maximalwert bis zum Nullpegel am Ende der Einschaltzeitdauer des PWM-Impulses benötigt.

Schließlich behandelt die Erfindung noch ein Beleuchtungssystem aufweisend mindestens zwei wie oben beschriebene LED-Module. Außerdem weist das Beleuchtungssystem einen Steuerungsbus auf. Über letzteren werden impulsbreitenmodulierte Steuerungssignale (PWM) an die LED-Module übermittelt.

Weitere Merkmale, Vorteile und Eigenschaften der vorliegenden Erfindung sollen nunmehr anhand der Figuren der begleitenden Zeichnungen und der detaillierten Beschreibung von Ausführungsbeispielen erläutert werden.
- Fig.1: zeigt ein Zeit-Diagramm eines PWM-Impulses mit einer korrespondieren Strom-Sollwertvorgabe und einem korrespondierendem LED-Strom, wie aus dem Stand der Technik bekannt,
- Fig.2: zeigt ein Zeit-Diagramm eines PWM-Impulses mit einer erfindungsgemäßen korrespondieren Strom-Sollwertvorgabe und einem korrespondierendem LED-Strom in einem ersten möglichen Szenario,
- Fig.3: zeigt ein Zeit-Diagramm eines PWM-Impulses mit einer erfindungsgemäßen korrespondieren Strom-Sollwertvorgabe und einem korrespondierendem LED-Strom in einem zweiten möglichen Szenario,
- Fig.4a: zeigt ein erstes schematisches Ausführungsbeispiel für ein erfindungsgemäßes LED-Modul, und
- Fig.4b: zeigt ein zweites schematisches Ausführungsbeispiel für ein erfindungsgemäßes LED-Modul.

Fig.1 zeigt ein zeitliches Diagramm, eines PWM-Impulses und die korrespondierenden Stromverläufe abhängig von der Sollwertvorgabe Iₛₒₗₗ für den zeitlich mittleren LED-Strom und des tatsächlichen Verlauf des LED-Stroms I_{LED}. Der LED-Strom wiederum wird bspw. mittels einer Hysterese- oder Zweipunktregelung entsprechend der Sollwertvorgabe in einem CCM-Betrieb, d.h. einem unterbrechungsfreien Betrieb geregelt. Der Schalter des LED-Konverters wird dabei eingeschaltet, wenn der direkt oder indirekt erfasste LED-Strom die untere Einschaltschwelle erreicht. Der Schalter wird wieder ausgeschaltet, wenn eine feste Ton-Zeit verstrichen ist oder der LED-Strom die obere Abschaltschwelle erreicht hat. Der LED-Strom steigt und fällt nur in erster Näherung linear und kann auch andere Verläufe, bspw. exponentiell aufweisen.

Die PWM-Abschaltflanke ist in diesem Beispiel annäherungsweise senkrecht und somit auch die Sollwertvorgabe. Dadurch ergibt sich wie Eingangs beschrieben das Problem eines relativ großen Jitter-Bereichs.

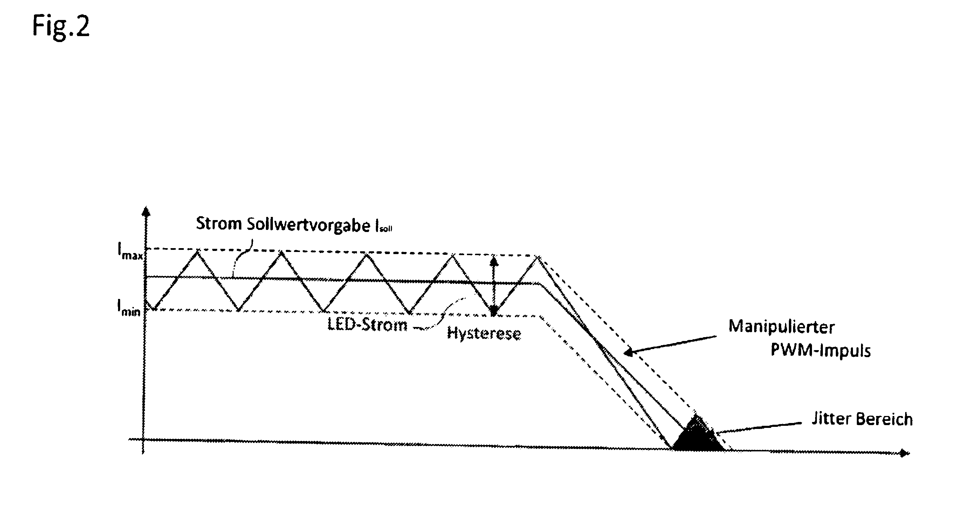

Fig.2 zeigt nun dasselbe zeitliche Diagramm wie Fig. 1, wobei jedoch das erfindungsgemäße Verfahren angewandt wird. Die Lösung des oben beschriebenen Problems, d.h. eine Vermeidung bzw. Reduzierung des Jitter-Bereichs, besteht nun darin, dass kein hartes Abschalten (wie in Fig.1) auf das instantane Abfallen der Sollwertvorgabe erfolgt. Vielmehr liegt ein " softes" Ausschalten vor, bei dem die Sollwertvorgabe nicht unmittelbar auf Null abfällt, sondern kontinuierlich über eine Sollwertrampe (bzw. Sollwertschräge) auf Null abfällt.

Dabei ist denkbar, dass das eingehende, möglicherweise analoge PWM-Signal dahingehend manipuliert wird, dass es an jedem Impuls eine abgeflachte Abschaltflanke aufweist. Das setzt voraus, dass der PWM-Eingang auch gleichzeitig die Sollwertvorgabe für das zeitliche Mittel des LED-Stroms in der Einschaltzeitdauer eines jeden PWM-Impulses darstellt. Die in diesem Beispiel auf der Grundlage des PWM-Signals bestimmten Sollwertvorgabe weist dann somit dieselbe abgeflachte Abschaltflanke auf. Natürlich weist eine PWM-Flanke nie einen vollkommen senkrechten Verlauf auf, sondern ist insofern immer ein wenig abgeflacht. Jedoch soll in dem erfindungsgemäßen Verfahren diese bewusst abgeflacht werden, also zusätzlich auf einen vorbestimmten Wert. Nach Möglichkeit soll dabei die Anschaltflanke nicht manipuliert, d.h. verändert werden.

Auch ist es jedoch möglich, dass die Sollwertvorgabe in einer integrierten Schaltung, wie einem ASIC, auf Grundlage des PWM-Signals berechnet und die Abschaltflanken entsprechend modifiziert wird. Die Sollwertvorgabe kann somit dem PWM-Signal entsprechen, insbesondere bezüglich der zeitlichen Parameter wie Frequenz und Tastverhältnis, wobei die Amplitude noch zusätzlich, beispielsweise von Signalen eines zusätzlichen Eingangs wie einer Amplituden-Dimmregelung, eingestellt werden kann. Außerdem ist in diesem Falle vorgesehen, die Abschaltflanken der somit ermittelten Sollwertvorgabe abzuflachen.

In jedem Fall ist es ein Gedanke der Erfindung, dass der LED-Strom nach der Einschaltzeitdauer des PWM-Impulses auf Grund des erfindungsgemäßen Verfahrens langsamer abklingt, als dies bei einer harten Abschaltflanke gemäß eines aus dem Stand der Technik bekannten PWM-Betriebs der Fall ist, bei dem die Dauer und der negative Gradient des abklingenden LED-Stroms einzig von der in den elektrischen Bauteilen, wie einer Speicherdrossel, gespeicherten Energie abhängt. In letzterem Fall handelt es sich um den sogenannten Freilaufstrom. Dieser kann auch durch die LEDs und/oder eine Freilaufdiode und andere Bauteile beeinflusst werden. Der erfindungsgemäße Betrieb wird dadurch erreicht, dass die Sollwertvorgabe eine entsprechende verzögerte Ausschaltregelung vorgibt.

Die Abschaltflanke ist also stetig fallend ausgebildet, und kann bspw. linear sein. Abhängig von der Implementierung dieser speziellen Ausgestaltung der Abschaltflanke des PWM-Signals können indessen auch andere Verläufe, wie bspw. exponentiell, etc. auftreten. Die Sollwertvorgabe für den zeitlich gemittelten LED-Strom kann insofern als Rampe mit konstanter oder exponentieller Steigung ausgebildet sein. Sie kann jedoch auch der Entladefunktion des Freilaufstroms entsprechen. Sie kann also denselben Gradienten aufweisen wie die Entladefunktion. Auch kann sie als Kombinationen verschiedener Funktionen ausgebildet sein.

Entscheidend ist, dass der zeitliche Abstand zwischen dem Einläuten des Abschaltvorgangs und dem Erreichen der Nulllinie bei stetig fallendem Verlauf größer ist als die Abklingzeitdauer des Freilaufstroms vom Maximalwert bis auf den Nullpegel.

Wie bereits oben beschrieben, wird vorgeschlagen, eine Hystereseregelung zur Regelung des LED-Stroms nach einer Sollwertvorgabe zu verwenden. Dabei wird der zickzackförmige Verlauf des LED-Stroms um die zeitlich gemittelte Sollwertvorgabe durch eine untere Einschaltschwelle Iₘᵢₙ und eine obere Ausschaltschwelle Iₘₐₓ begrenzt. Bei Einsatz eines Kondensators können diese Rippel abgerundet werden, sodass diese eher einen sinusförmigen Verlauf aufweisen. Denkbar ist nun, dass die Schwellen als absolute Messwerte, die beispielsweise mittels eines Messwiderstands erfasst werden, definiert sind. Auch können diese in Abhängigkeit von der Sollwertvorgabe, welche dann gemessen wird, beispielsweise mittels eines Vergleichers, eines Komparators oder einer softwaremäßigen Lösung in der integrierten Schaltung eingestellt werden. Es ist jedoch auch denkbar, dass der LED-Strom immer um die Sollwertvorgabe herum verläuft und nach dem Kreuzen bei einem festen Wert, wie beispielsweise der minimalen Einschaltzeit tₒₙ, ein bzw. ausschaltet.

Natürlich ist noch zu berücksichtigen, dass der Freilaufstrom und der Verlauf des LED-Strom in Wirklichkeit nicht linear sind, wie dies in den Figuren vereinfacht dargestellt ist. Insbesondere können diese eine negativ exponentielle Form aufweisen, die durch den Einsatz einer Speicherdrossel bedingt ist. Entsprechend ist dies in dem erfindungsgemäßen Verfahren zu berücksichtigen. Beispielsweise können durchschnittliche Gradientenwerte in einer integrierten Schaltung vorgespeichert sein oder in Messdurchläufen ermittelt werden, sodass eine solche Sollwertvorgabe bestimmt werden kann, dass der Zeitraum des Ausschaltens des LED-Stroms grösser ist als die Zeit, die der Freilaufstrom durch die LEDs von seinem Maximalwert bis zum Nullpegel benötigen würde.

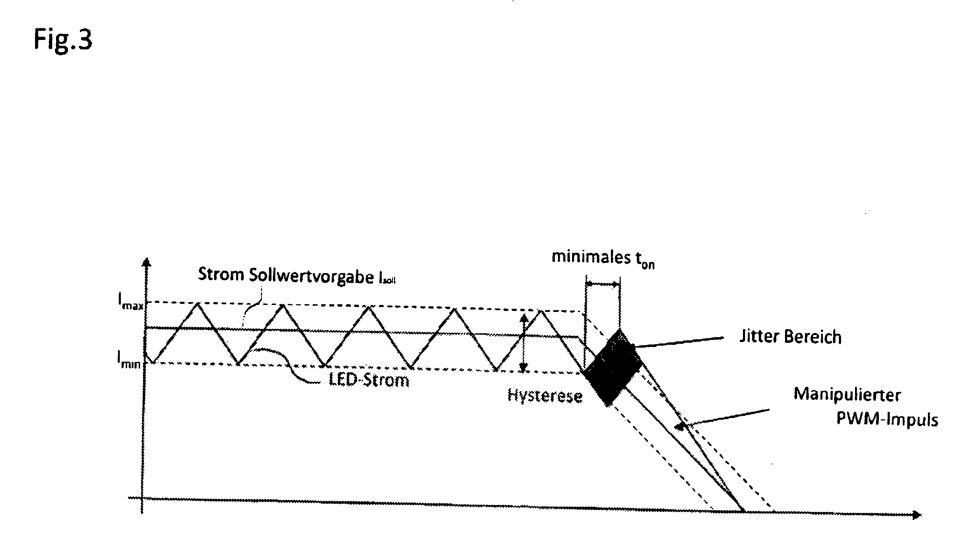

Fig. 2 und Fig. 3 zeigen nun Beispiele, in denen jeweils ein "Worst Case" Szenario skizziert ist, bei dem bei Anwendung des erfindungsgemäßen Verfahrens ein Jitter Bereich auftreten kann. Es ist jedoch sogleich erkennbar, dass dieser im Vergleich zu dem in Fig.1 stark reduziert werden konnte.

In Fig.2 wird der Fall skizziert, dass der tatsächliche LED-Strom gerade ein lokales Maximum, d.h. ein auf Grund einer Zwei-Punkt-Regelung auftretendes Rippel erreicht hat, wenn der Ausschaltbefehl eingeht. Die Sollwertvorgabe sinkt also nun, wie in diesem Beispiel skizziert, in einer konstanten Gerade ab. Der LED-Strom folgt ihr, dabei ist zu erkennen, dass dieser, der beim Folgen zumindest im ersten Bereich dem Freilauf-Strom entspricht, schneller absinkt als die Sollwertvorgabe. Dadurch kann der Fall auftreten, dass der LED-Strom mindestens einmal die untere Grenze Iₘᵢₙ erreichen und somit erneut ansteigen kann, bis er die Grenze Iₘₐₓ erreicht. Die Kurve der Sollwertvorgabe schneidet also mindestens einmal die Kurve des LED-Stroms, insbesondere von unten kommend. Somit kann sich also wie in Fig.2 gezeigt mindestens ein weiteres Rippel nach der Einschaltzeitdauer des PWM-Impulses ergeben. In Fig.2 ist dies so dargestellt, dass je nach Phasenlage des LED-Stroms zu den PWM-Impulsen ganz am Ende des Abklingens des LED-Stroms noch ein Rippel auftreten kann oder nicht. Der Bereich zwischen diesen beiden möglichen Verläufen stellt den Jitter-Bereich dar. Dieser ist indessen wesentlich kleiner als in der Ausführung gemäß dem Stand der Technik, da ja der Maximalwert (Abschaltschwelle Iₘₐₓ) durch die fallende PWM-Flanke wesentlich geringer ist als in dem Fall von Fig.1. Aufgrund der nunmehr bereits sehr stark entladenen passiven Bauteile entsteht also ein vergleichsweise kleiner Jitter-Bereich. Somit ist der "Flackerbeitrag", dargestellt durch die Fläche des Jitter-Bereichs, wesentlich geringer als beim Stand der Technik.

Fig.3 zeigt ein weiteres Extrem-Szenario: Dort wird davon ausgegangen, dass der Beginn der abfallenden PWM-Flanke zeitlich mit dem Einschaltzeitpunkt zusammenfällt. Das bedeutet, dass der Strom den unteren Einschaltwert Iₘᵢₙ erreicht, wobei abhängig von der genauen zeitlichen Taktung der Fall auftreten kann, dass genau noch ein Einschaltvorgang ausgelöst wird und somit die minimale Einschaltzeit tₒₙ ausgelöst wird. Wieder kommt es zu einem Abfallen und zu einem unerwünschten relativ großen zusätzlichen Lichtbeitrag.

Allerdings ist in diesem Fall dank des erfindungsgemäßen Verfahrens die Differenz, d.h. der eigentliche Flackerbeitrag im Vergleich zu dem in Fig.1 relativ gering: Wenn nämlich im anderen Extremfall die Zeit tₒₙ nicht mehr ausgelöst wird, wird dank des erfindungsgemäßen Verfahrens, d.h. dank der abgeflachten Sollwertvorgabe, der abfallende LED-Strom zu einem etwas späteren Zeitpunkt die untere Einschaltschwelle, die ja entsprechend laufend fällt, wieder erreichen. In einer relativ kurzen Zeitdauer zu dem vorher genannten Einschaltzeitpunkt wird es also wieder zu einem Einschaltvorgang mit einer Zeitvorgabe Tₒₙ kommen oder alternativ bis die obere Ausschaltschwelle Iₘₐₓ erreicht ist. Da nunmehr in dem einen Extremfall die Einschaltzeitdauer relativ knapp nach dem nächsten Extremfall liegt, ist die Differenz der beiden Lichtleistungsbeiträgt (Flackerbeitrag) bezeichnet mit dem Jitter-Bereich wesentlich kleiner als beim Stand der Technik (Fig.1). Hinsichtlich des Flackerns kommt es nämlich nicht auf den Absolutwert des Beitrags der Lichtleistung nach dem Beginn der Abfallflanke des PWM-Signals an, sondern nur auf die Differenzen der extrem möglichen Szenarien, wenn diese Differenzen in einem für das menschliche Auge gut auflösbaren Frequenzbereich auftreten.

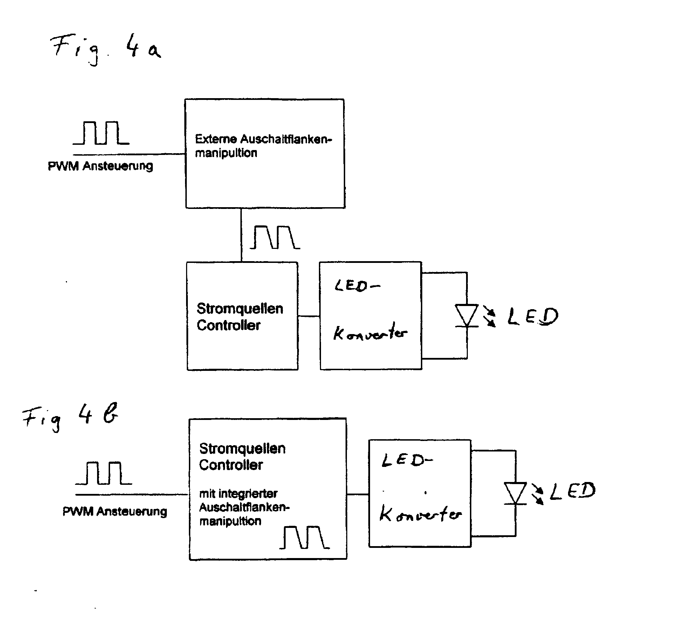

Fig.4a und Fig.4b zeigen noch zwei schematische Ausführungsbeispiele für ein erfindungsgemäßes LED-Modul.

Die LED-Module weisen jeweils einen LED-Konverter zur Anpassung des Stroms, mit dem die mindestens eine LED betrieben wird, auf oben beschriebene Weise auf. Außerdem umfassen sie einen Stromquellen Controller mit einer integrierten Schaltung, wie einen ASIC. Der Stromquellen Controller hat einen Eingang, dem das PWM-Signal zugeführt wird.

Es können mehrere LED-Module in einem Beleuchtungssystem gemeinsam geregelt werden, beispielsweise indem sie über einen gemeinsamen Kommunikationsbus PWM-Signale erhalten.

In Fig. 4a ist eine externe Ausschaltflankenmanipulation gezeigt. Das bedeutet, dass in diesem Fall eine separate Schaltung verwendet wird, die beispielsweise dem Signaleingang eines gewöhnlichen LED-Konverters vorgeschaltet sein kann. Diese manipuliert auf oben erläuterte Weise ein vorzugsweise analoges PWM-Signal. Gemäß der Erfindung ist also zwischen dem zugeführten PWM-Signal und dem Eingang des Stromquellen Controllers eine äußere Beschaltung vorgesehen, die die Ausschaltflanke abläuft. Die äußere Beschaltung ist indessen so auszuführen, dass die Einschaltflanke weiterhin im Wesentlichen senkrecht verläuft. Abhängig von dieser (analogen) Sollwertvorgabe in Form des manipulierten PWM-Signals kann dann in der integrierten Schaltung das entsprechende Fenster für die Hystereseregelung (Iₘₐₓ, Iₘᵢₙ) vorgegeben werden.

Fig.4b zeigt eine alternative Ausführungsform zu Fig.4a. In Fig.4b wird die abfallende Flanke des PWM-Signals in dem Stromquellen Controller selbst implementiert. Entsprechend kann also beispielsweise eine Sollwertvorgabe mit abgeflachter Abschaltflanke in der integrierten Schaltung berechnet werden.

## Patentansprüche

1. Verfahren zum Betreiben wenigstens einer LED,
wobei ein PWM-Signal einem Konverter zugeführt wird, der während der Einschaltzeitdauer eines PWM-Impulses einen zyklisch steigenden und fallenden LED-Strom erzeugt, dessen zeitliches Mittel auf eine Sollwertvorgabe geregelt ist,
**dadurch gekennzeichnet,**
**dass** nach der Einschaltzeitdauer des PWM-Impulses der zeitlich mittlere Wert des negativen Gradienten des abfallenden LED-Stroms kleiner ist als der mittlere Gradient des fallenden LED-Stroms während der Einschaltzeitdauer des PWM-Impulses
wobei am Ende der Einschaltzeitdauer des PWM-Impulses die Sollwertvorgabe für den zeitlich gemittelten LED-Strom nicht in einem Sprung auf Null gesetzt wird, sondern über einen Zeitraum grösser als Null in mehreren diskreten Sprüngen oder stetig, insbesondere in einer vorbestimmten Kurve, auf Null gefahren wird.

2. Verfahren nach Anspruch 1,
wobei nach der Einschaltzeitdauer des PWM-Impulses der zeitlich mittlere Wert des negativen Gradienten des abfallenden LED-Stroms kleiner ist als der mittlere Gradient des abfallenden Freilaufstroms durch die LEDs, wobei der Freilaufstrom durch die LEDs dann auftritt, wenn am Ende der Einschaltzeitdauer des PWM-Impulses die Sollwertvorgabe für den zeitlich gemittelten LED-Strom in einem Sprung auf Null gesetzt wird.

3. Verfahren nach Anspruch 1 oder 2,
wobei der zeitlich mittlere Wert des Gradienten des LED-Stroms nach der Einschaltzeitdauer des PWM-Impulses durch die Sollwertvorgabe des LED-Stroms vorgegeben wird.

4. Verfahren nach einem der vorhergehenden Ansprüche,
wobei zeitlich mittlere Wert des Gradienten des LED-Stroms nach der Einschaltzeitdauer des PWM-Impulses durch einen manipulierten PWM-Impuls bestimmt wird, wobei der manipulierte PWM-Impuls eine abgeflachte Abschaltflanke aufweist.

5. Verfahren nach dem vorherigen Anspruch,
wobei die Sollwertvorgabe des LED-Stroms dem manipulierten PWM-Impuls entspricht, insbesondere im zeitlichen Verlauf und/oder bezüglich des Gradienten.

6. Verfahren nach einem der vorherigen Ansprüche,
wobei der Konverter zur Regelung des zeitlichen Mittels des Stromwerts abhängig von der Sollwertvorgabe einen unteren Schwellenwert für den LED-Strom setzt, bei dem eine Induktivität im Konverter geladen wird, sowie einen oberen Grenzwert für den LED-Strom, bei dem die Induktivität wieder über die wenigstens eine LED entladen wird.

7. Verfahren nach einem der vorherigen Ansprüche,
wobei das Laden und/oder Entladen der Induktivität eine minimale Zeit (tₒₙ) aufweist, wobei ein Schalter, vorzugsweise ein MOSFET, und/oder der Konverter die minimale Einschaltdauer (tₒₙ) definiert.

8. Verfahren nach einem der vorherigen Ansprüche, wobei eine Messung des tatsächlichen LED-Strom erfolgt, beispielsweise über einen Messwiderstand, und in Abhängigkeit von dem Messwert und der aktuellen Sollwertvorgabe die Induktivität geladen oder entladen wird.

9. Verfahren nach einem der vorherigen Ansprüche, wobei nach der Einschaltzeitdauer des PWM-Impulses die Induktivität mindestens einmal neu geladen wird.

10. Verfahren nach einem der vorherigen Ansprüche, wobei nach der Einschaltzeitdauer des PWM-Impulses die Sollwertvorgabe für den zeitlich gemittelten LED-Strom als Rampe mit konstanter oder exponentieller negativer Steigung ausgebildet ist.

11. Verfahren nach einem der vorherigen Ansprüche, wobei nach der Einschaltzeitdauer des PWM-Impulses die Sollwertvorgabe für den zeitlich gemittelten LED-Strom der Entladefunktion des Freilaufstroms entspricht.

12. Integrierte Schaltung, insbesondere ASIC oder Mikrokontroller, die zur Durchführung eines Verfahrens nach einem der vorhergehenden Ansprüche ausgebildet ist, wenn sie in einem LED-Konverter eingebaut ist.

13. LED-Konverter, aufweisend eine Integrierte Schaltung nach Anspruch 12.

14. LED-Modul, aufweisend wenigstens eine LED, die durch einen LED-Konverter nach Anspruch 13 betrieben wird.

## Claims

1. Method for operating at least one LED, wherein a PWM signal is supplied to a converter, which, during a switch-on duration of a PWM pulse, generates a cyclically rising and falling LED current, whose temporal mean is adjusted to a setpoint value preset, **characterized in that**, after the switch-on duration of the PWM pulse, the temporal mean value of the negative gradient of the falling LED current is lower than the mean gradient of the falling LED current during the switch-on duration of the PWM pulse, wherein, at the end of the switch-on duration of the PWM pulse, the setpoint value preset for the temporally averaged LED current is not set to zero in one step change, but is driven to zero over a time period greater than zero in a plurality of discrete step changes or continuously, in particular following a predetermined curve.

2. Method according to Claim 1, wherein, after the switch-on duration of the PWM pulse, the temporal mean value of the negative gradient of the falling LED current is lower than the mean gradient of the falling freewheeling current through the LEDs, wherein the freewheeling current through the LEDs occurs when, at the end of the switch-on duration of the PWM pulse, the setpoint value preset for the temporally averaged LED current is set to zero in one step change.

3. Method according to Claim 1 or 2, wherein the temporal mean value of the gradient of the LED current after the switch-on duration of the PWM pulse is predetermined by the setpoint value preset for the LED current.

4. Method according to one of the preceding claims, wherein the temporal mean value of the gradient of the LED current after the switch-on duration of the PWM pulse is determined by a manipulated PWM pulse, wherein the manipulated PWM pulse has a flattened switch-off edge.

5. Method according to the preceding claim, wherein the setpoint value preset for the LED current corresponds to the manipulated PWM pulse, in particular in the time profile and/or with respect to the gradient.

6. Method according to one of the preceding claims, wherein the converter for regulating the temporal mean of the current value depending on the setpoint value preset sets a lower threshold value for the LED current, at which an inductance in the converter is charged, and an upper limit value for the LED current, at which the inductance is discharged again via the at least one LED.

7. Method according to one of the preceding claims, wherein the charging and/or discharging of the inductance has a minimum time (tₒₙ), wherein a switch, preferably a MOSFET, and/or the converter defines the minimum switch-on duration (tₒₙ).

8. Method according to one of the preceding claims, wherein a measurement of the actual LED current is performed, for example via a measuring resistor, and, depending on the measured value and the present setpoint value preset, the inductance is charged or discharged.

9. Method according to one of the preceding claims, wherein, after the switch-on duration of the PWM pulse, the inductance is recharged at least once.

10. Method according to one of the preceding claims, wherein, after the switch-on duration of the PWM pulse, the setpoint value preset for the temporally averaged LED current is in the form of a ramp with a constant or exponential negative gradient.

11. Method according to one of the preceding claims, wherein, after the switch-on duration of the PWM pulse, the setpoint value preset for the temporally averaged LED current corresponds to the discharge function of the freewheeling current.

12. Integrated circuit, in particular ASIC or microcontroller, which is designed to implement a method according to one of the preceding claims when it is installed in an LED converter.

13. LED converter having an integrated circuit according to Claim 12.

14. LED module, having at least one LED, which is operated by an LED converter according to Claim 13.

## Revendications

1. Procédé pour faire fonctionner au moins une LED,
dans lequel un signal MLI est fourni à un convertisseur, qui génère pendant la durée de l'état haut d'une impulsion MLI un courant de LED croissant et décroissant de manière cyclique, dont la moyenne temporelle est asservie sur une instruction de valeur de consigne,
**caractérisé en ce que**, après la durée de l'état haut de l'impulsion MLI, la valeur moyenne dans le temps du gradient négatif du courant de LED décroissant est inférieure au gradient moyen du courant de LED décroissant pendant la durée de l'état haut de l'impulsion MLI,
dans lequel, à la fin de la durée de l'état haut de l'impulsion MLI, l'instruction de valeur de consigne pour la moyenne temporelle du courant de LED n'est pas mise à zéro en un saut, mais est amenée à zéro sur une période supérieure à zéro en plusieurs sauts discrets ou de manière continue, en particulier selon une courbe prédéterminée.

2. Procédé selon la revendication 1,
dans lequel, après la durée de l'état haut de l'impulsion MLI, la valeur moyenne dans le temps du gradient négatif du courant de LED décroissant est inférieure au gradient moyen du courant de roue libre décroissant à travers les LEDs,
dans lequel le courant de roue libre à travers les LEDs apparaît lorsqu'à la fin de la durée de l'état haut de l'impulsion MLI l'instruction de valeur de consigne pour la moyenne temporelle du courant de LED est mise à zéro en un saut.

3. Procédé selon la revendication 1 ou 2,
dans lequel la valeur moyenne dans le temps du gradient du courant de LED après la durée de l'état haut de l'impulsion MLI est prédéterminée par l'instruction de valeur de consigne du courant de LED.

4. Procédé selon l'une des revendications précédentes,
dans lequel la valeur moyenne dans le temps du gradient du courant de LED après la durée de l'état haut de l'impulsion MLI est déterminée par une impulsion MLI manipulée, dans lequel l'impulsion MLI manipulée présente un flanc descendant aplati.

5. Procédé selon la revendication précédente,
dans lequel l'instruction de valeur de consigne du courant de LED correspond à l'impulsion MLI manipulée, en particulier dans l'évolution dans le temps et/ou par rapport au gradient.

6. Procédé selon l'une des revendications précédentes,
dans lequel le convertisseur pour l'asservissement de la moyenne temporelle de la valeur de courant en fonction de l'instruction de valeur de consigne fixe une valeur de seuil inférieure pour le courant de LED, auquel une inductance est chargée dans le convertisseur, ainsi qu'une valeur limite supérieure pour le courant de LED, auquel l'inductance est à nouveau déchargée par l'intermédiaire de ladite moins une LED.

7. Procédé selon l'une des revendications précédentes,
dans lequel la charge et/ou la décharge de l'induction présente un temps minimum (tₒₙ), dans lequel un commutateur, de préférence un MOSFET, et/ou le convertisseur définit la durée de l'état haut minimum (tₒₙ).

8. Procédé selon l'une des revendications précédentes, dans lequel une mesure du courant de LED réel a lieu, par exemple par l'intermédiaire d'une résistance de mesure, et en fonction de la valeur de mesure et de l'instruction de valeur de consigne actuelle l'inductance est chargée ou déchargée.

9. Procédé selon l'une des revendications précédentes, dans lequel après la durée de l'état haut de l'impulsion MLI l'inductance est rechargée au moins une fois.

10. Procédé selon l'une des revendications précédentes, dans lequel après la durée de l'état haut de l'impulsion MLI l'instruction de valeur de consigne pour la moyenne temporelle du courant de LED est configurée sous forme de rampe ayant une pente négative constante ou exponentielle.

11. Procédé selon l'une des revendications précédentes, dans lequel après la durée de l'état haut de l'impulsion MLI l'instruction de valeur de consigne pour la moyenne temporelle du courant de LED correspond à la fonction de décharge du courant de roue libre.

12. Circuit intégré, en particulier ASIC ou microcontrôleur, qui est configuré pour exécuter un procédé selon l'une des revendications précédentes lorsqu'il est installé dans un convertisseur à LED.

13. Convertisseur à LED, présentant un circuit intégré selon la revendication 12.

14. Module à LED, présentant au moins une LED, qui est alimenté par un convertisseur à LED selon la revendication 13.
